# EUROPÄISCHE PATENTSCHRIFT

(11) **EP 3 880 318 B1**
(45) Veröffentlichungstag und Bekanntmachung des Hinweises auf die Patenterteilung: **08.10.2025**
(21) Anmeldenummer: 20708409.6
(22) Anmeldetag: 03.01.2020
(51) Int. Cl.: A63B 22/06, A63B 22/00, A63B 71/02, A61B 5/22, B62J 45/421, G01L 5/22, A63B 21/005, B62M 3/02, A61H 1/02, A63B 21/00, B62J 45/411, A63B 23/035

(54) **TRAININGSGERÄT MIT EINER EXTREMITÄTENSTÜTZE SOWIE VERFAHREN ZUR BESTIMMUNG DER AUF EINE EXTREMITÄTENSTÜTZE EINES TRAININGSGERÄTES WIRKENDEN KRAFT**
EXERCISING APPARATUS WITH A LIMB SUPPORT, AND METHOD FOR DETERMINING THE FORCE ACTING ON A LIMB SUPPORT OF AN EXERCISING APPARATUS
APPAREIL D'ENTRAÎNEMENT PHYSIQUE DOTÉ D'UN SUPPORT DE MEMBRES ET PROCÉDÉ DE DÉTERMINATION DE LA FORCE AGISSANT SUR UN SUPPORT DE MEMBRE-S D'UN APPAREIL D'ENTRAÎNEMENT PHYSIQUE

(30) Priorität: 08.01.2019 DE 102019100291
(43) Veröffentlichungstag der Anmeldung: 22.09.2021
(73) Patentinhaber: medica-Medizintechnik GmbH, 88454 Hochdorf (DE)
(72) Erfinder: HÖBEL, Otto, 88454 Hochdorf (DE)
(74) Vertreter: Hentrich Patent- & Rechtsanwaltspartnerschaft mbB
(86) Internationale Anmeldenummer: PCT/DE2020/100001
(87) Internationale Veröffentlichungsnummer: WO 2020/143874

(56) Entgegenhaltungen:
- WO-A1-2009/006673
- DE-A1- 102005 027 181
- DE-U1- 29 508 072
- US-A1- 2009 211 395
- US-A1- 2010 173 747

## Beschreibung

Die Erfindung betrifft ein Trainingsgerät für das Training mindestens einer Extremität, mit einem Tragegestell und mindestens einer Kurbel, die an einer dem Tragegestell zugeordneten Drehachse angeordnet ist, und mit mindestens einer Extremitätenstütze, die in unterschiedlichen radialen Abständen von der Drehachse, an der mindestens einen Kurbel befestigbar ist. Die Erfindung betrifft weiterhin ein Verfahren zur Bestimmung der auf eine Extremitätenstütze eines Trainingsgerätes wirkenden Kraft.

Trainingsgeräte der eingangs genannten Art sind beispielsweise aus der DE 10 2011 055 200 B3, der US 2009 / 0 211 395 A1 und der DE 295 08 072 U1 bekannt, die insbesondere für das gezielte Training einzelner Muskelpartien der Extremität geeignet sind, wie dies bei der Rehabilitation von Patienten erforderlich ist. Derartige Trainingsgeräte werden aber auch im Freizeitbereich als Sportgeräte, beispielsweise als Ergometer genutzt, oder für das gezielte Training von Spitzensportlern. Zu beachten ist dabei, dass insbesondere bei der Rehabilitation von Patienten eine genaue Kontrolle der Belastungen erforderlich ist, insbesondere der auf die Extremitätenstütze wirkenden Kraft. Als Beispiel kann dabei der Fall des Einsatzes einer künstlichen Hüfte genannt werden mit der Vorgabe des behandelnden Arztes, dass in der Rehabilitation die Belastung an der die künstlichen Hüfte aufweisenden Extremität nicht über einen vorgegebenen Wert, beispielsweise 20 kg mit der dazugehörenden Kraft, liegen soll. Da die vorliegenden Trainingsgeräte individuell an die unterschiedlichen Nutzer im Rehabilitationsbereich anpassbar sind durch Änderung des radialen Abstandes der Extremitätenstütze von der Drehachse, führt dies dazu, dass aus dem wirkenden Drehmoment nicht eindeutig auf die Belastung geschlossen werden kann, aufgrund des einfachen Zusammenhangs:
Drehmoment gleich Kraft x Hebelarm.

Alternativ besteht auch die Möglichkeit, dass das Trainingsgerät mit einem Motor versehen ist, der für das passive Training ein bestimmtes Drehmoment an der Drehachse bereitstellt, wobei aber wiederum durch die vorstehend genannte Abhängigkeit aus diesem Drehmoment ohne Kenntnis des Radialabstandes nicht eindeutig auf die auf den Patienten wirkende Kraft geschlossen werden kann, so dass der Rehabilitationserfolg gefährdet ist oder sogar eine gesundheitliche Schädigung des Patienten auftreten kann. Zur Vermeidung dieser Nachteile ist es bekannt, der Extremitätenstütze, beispielsweise einer Fußschale für ein Bein, Sensoren zur Erfassung der wirkenden Kraft zuzuordnen, nämlich Dehnmessstreifensensoren. Dies hat allerdings den Nachteil, dass dies zu einer deutlichen Verteuerung des Trainingsgerätes und damit zu einer Belastung des für die Rehabilitation erforderlichen Etats führt.

Die WO 2009 / 006 673 A1 offenbart einen Kurbelarm mit Spannungsverstärker. Dokument US 2009/211395 A1 offenbart ein Trainingsgerät gemäß den Merkmalen des Oberbegriffs des Anspruchs 1.

Der Erfindung liegt daher die Aufgabe zugrunde, ein Trainingsgerät der eingangs genannten Art so auszubilden, dass in einfacher kostengünstiger Weise eine Kontrolle über die auf den Nutzer des Trainingsgerätes wirkende Kraft möglich ist.

Aufgabe der Erfindung ist es weiterhin, ein verbessertes Verfahren zur Bestimmung der auf eine Extremitätsstütze eines Trainingsgerätes wirkenden Kraft anzugeben. Der das Trainingsgerät betreffende Teil der Aufgabe wird durch ein Trainingsgerät der eingangs genannten Art dadurch gelöst, dass der von dem Mittel erfasste radiale Abstand als Messwert der Auswerteeinheit zur Berechnung der auf die Extremitätenstütze ausgeübten Kraft zugeführt ist.

Die Erfindung geht von der Erkenntnis aus, dass nicht nur die Möglichkeit besteht, die Kraft an der Extremitätenstütze unmittelbar zu messen, sondern dass auch die Kraft als abgeleitete Größe bestimmt werden kann, wenn neben dem wirkenden Drehmoment der radiale Abstand der Extremitätenstütze von der Drehachse bekannt ist. Daher ist erfindungsgemäß ein Mittel zur Erfassung des radialen Abstandes der Extremitätenstütze von der Drehachse vorgesehen, mit dessen Kenntnis dann in Verbindung mit dem vom Patienten erzeugten Drehmoment oder dem auf den Patienten ausgeübten Drehmoment die wirkende Kraft bestimmt werden kann. Bei gesunden Sportlern kann dabei angenommen werden, dass eine symmetrische Kraftentwicklung bei der rechten und der linken Extremität vorliegt, wobei diese Annahme im Rehabilitationsbereich nicht immer gerechtfertigt ist, sodass vorteilhafterweise jeder Extremitätenstütze ein entsprechendes Mittel zugeordnet ist. Mit der durch die Auswerteeinheit bereitgestellten Auswertung besteht die Möglichkeit, gezieltes Training zu kontrollieren und insbesondere gegebenenfalls auf den Motor zur Reduktion des erzeugten Antriebsmomentes einzuwirken oder im Sinne eines Bio-Feedbacks dem Patienten zu signalisieren, dass die erzeugte Kraft überschritten ist. Die Auswerteeinheit kann dabei auch durch eine Anzeigeeinheit ergänzt sein, mit dem die berechnete Kraft als Zahlenwert angezeigt wird, so dass die Information des Patienten oder des diesen betreuenden Physiotherapeuten nicht auf das Erreichen oder Unterschreiten eines Schwellenwertes beschränkt ist.

Ganz besonders bevorzugt ist es, wenn das durch mindestens einen Sensor gebildete Mittel, aus eine Gruppe ausgewählt ist, die Hall-Sensoren, Ultraschallsensoren, Lasersensoren und photoelektrische Zellen als Teil von Lichtschranken umfasst.

Ein Trainingsgerät mit einem durch den Hall-Sensor gebildeten Sensor zeichnet sich dadurch aus, dass auf einer stationär zur Drehachse angeordneten Platine der Hall-Sensor positioniert ist, und dass in der an der Platine vorbeistreichenden Kurbel Aufnahmen und/oder ein Langloch ausgebildet sind, in denen die Extremitätenstützen mit einem einen Magneten aufweisenden Zapfen einsteckbar. Dadurch ergibt sich der Vorteil, dass bei einer vorbeistreifenden Kurbel der gewählte Kurbelradius erkannt werden kann, also der Abstand der Extremitätenstützen von der Drehachse. Dabei kann durch den Hall-Sensor auch erfasst werden, ob ein magnetischer Nordpol oder ein magnetischer Südpol vorbeistreift, sodass zweckmäßigerweise der Zapfen einen Stabmagneten aufweist mit einer Nord-Süd-Polausrichtung, die koaxial zur Zapfenachse liegt. Dadurch können die in die Aufnahmen oder das Langloch einsteckbaren Extremitätenstützen in zwei deutlich unterscheidbare Gruppen eingeteilt werden, beispielsweise für das Beintraining und das Armtraining, wenn also beispielsweise für das Beintraining der magnetische Nordpol auf der der Kurbel zuweisenden Seite angeordnet ist und für das Armtraining der magnetische Südpol der Kurbel zuweist, also der Stabmagnet um 180° gedreht ist. Bevorzugt ist es weiterhin, dass auf der Platine mehrere Hall-Sensoren angeordnet sind, was insbesondere Vorteile bietet, wenn nicht diskret voneinander beabstandete Aufnahmen gegeben sind, sondern ein Langloch bzw. eine entsprechende Kulisse genutzt ist, da durch den Einsatz mehrerer Sensoren durch Verrechnen der Signale stufenlos die Position der Extremitätenstütze in dem Langloch berechnet werden kann.

Ein weiterer Vorteil ergibt sich, wenn die auf der Platine angeordneten Hall- Sensoren auf einer nicht durch die Drehachse gehenden Geraden angeordnet sind, also die durch die Hall-Sensoren definierte Gerade nicht in einer streng radialen Ausrichtung vorliegt, sondern eine Neigung gegenüber der radialen Ausrichtung gegeben ist, da so die Kurbelstellung zu der Platine immer gleich ist, wenn der Magnet vorbeistreift und somit die Platine auch als Indexgeber fungieren kann.

Ferner wird die Aufgabe gelöst durch ein Trainingsgerät mit einer Extremitätenstütze, bei der ein Zapfen vorhanden ist, der einen Stabmagneten aufweist mit einer Nord-Süd-Polausrichtung, die koaxial zur Zapfenaufnahme liegt. Da bei einer derartigen Extremitätenstütze, bei deren Verwendung im Training nicht nur das Vorbeistreichen des Magneten erfasst werden kann, sondern auch dessen Ausrichtung, ist die weitere Möglichkeit gegeben, dass die Orientierung der Polausrichtung zur Erkennung der Zugehörigkeit zu einer Zubehörgruppe nutzbar ist.

Der das Verfahren betreffende Teil der Aufgabe wird gelöst durch ein Verfahren zur Bestimmung der auf eine Extremitätenstütze eines Trainingsgerätes wirkenden Kraft, umfassend die Schritte der Positionierung der in unterschiedlichen radialen Abständen von der Drehachse der zugeordneten Kurbel befestigbaren Extremitätenstütze an einer Kurbel in einem radialen Abstand von deren Drehachse und Erfassung des radialen Abstandes mittels mindestens einem Sensor und Auswertung des durch den Sensor erfassten Messwertes in Verbindung mit einem an der Drehachse einwirkenden Drehmoment in einer Auswerteeinheit.

Im Folgenden wird die Erfindung an in der Zeichnung dargestellten Ausführungsbeispielen näher erläutert; es zeigen:
- Figur 1: eine schematisierte Darstellung eines Trainingsgerätes in einer Seitenansicht,
- Figur 2: eine vergrößerte Darstellung des zur Erläuterung der Erfindung erforderlichen Teils des Trainingsgerätes in einer perspektivischen Darstellung,

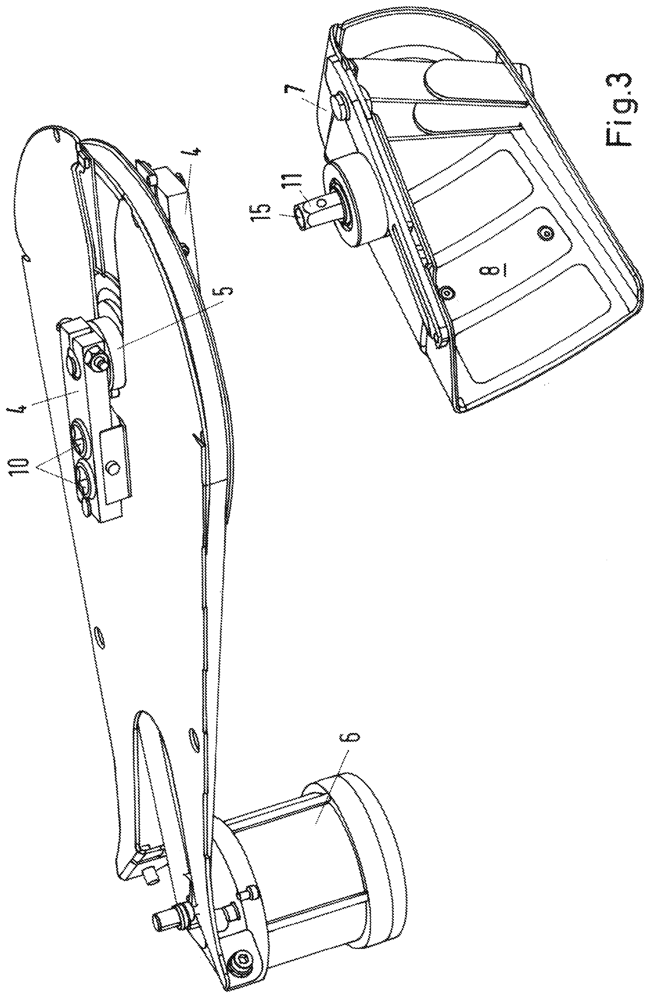

- Figur 3: eine perspektivische Darstellung aus einem gegenüber Figur 2 anderen Blickwinkel, und
- Figur 4: eine Seitenansicht des Gegenstandes aus Figur 2, gezeigt ohne die Extrem itätenstütze.

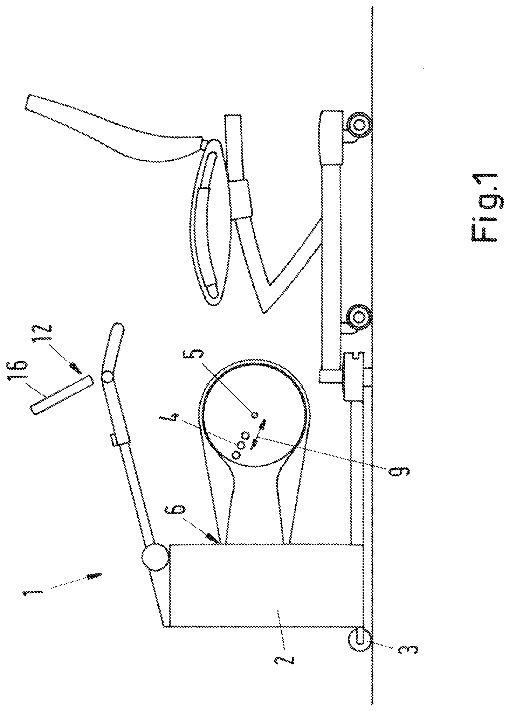

In der Figur 1 ist ein Trainingsgerät 1 dargestellt, das geeignet ist für das Training eines Extremitätenpaares, nämlich zweier Beine, wobei dieses Ausführungsbeispiel nur zur Erläuterung der Erfindung dient, die auch zum Training des anderen Extremitätenpaares, nämlich der Arme, genutzt werden kann. Das Trainingsgerät 1 weist ein Tragegestell 2 auf, das bei dem gezeigten Ausführungsbeispiel auf vorzugsweisen bremsbaren Rollen 3 angeordnet ist. Das Ausführungsbeispiel weist zwei Kurbeln 4 auf, die an einer dem Tragegestell 2 zugeordneten Drehachse 5 angeordnet sind. Des Weiteren verfügt das Trainingsgerät 1 über einen Motor 6 zum Antreiben der Drehachse 5 und über zwei Extremitätenstützen 7, nämlich zwei Fußschalen 8, die in unterschiedlichen radialen Abständen 9 von der Drehachse 5 der jeweils zugeordneten Kurbel 4 befestigbar sind, nämlich indem bei dem gezeigten Ausführungsbeispiel in jeder Kurbel 4 zwei Aufnahmen 10 ausgebildet sind, in die ein der Fußschale 8 zugeordneter Zapfen 1 1 einsteckbar ist.

Es ist ein Mittel zur Erfassung des radialen Abstandes 9 der Extremitätenstütze von der Drehachse vorgesehen, das zur automatisierten Erfassung ausgelegt ist, wobei der von dem Mittel erfasste, radiale Abstand 9 als Messwert einer Auswerteeinheit 12 zuführbar ist zur Berechnung der auf die Extremitätenstütze 7 ausgeübten Kraft anhand der Formel Kraft = Drehmoment geteilt durch Hebelarm, wobei der Hebelarm durch den radialen Abstand 9 der Extremitätenstütze 7 von der Drehachse 5 gegeben ist. Das Drehmoment wird dabei von dem Motor 6 generiert und ist bekannt bzw. wird von dem Patienten aufgebracht, sodass anhand des erfassten Drehmomentes und der Kenntnis des radialen Abstandes 9 die daraus abgeleitete Kraft kontrolliert werden kann, ob das Training des Patienten effektiv ist und dabei eine Überlastung vermeidet.

Zur Erfassung des radialen Abstandes sind Ultraschallsensoren, Lasersensoren und photoelektrische Zellen als Teil von Lichtschranken geeignet. Bei dem gezeigten Ausführungsbeispiel ist die Verwendung von Hall-Sensoren 13 gezeigt, nämlich von zwei Hall-Sensoren, die auf einer stationär zur Drehachse 5 angeordneten Platine 14 positioniert sind, wobei in der an der Platine 14 vorbei streichenden Kurbel 4 die Aufnahmen 10 ausgebildet sind, in denen die Extremitätenstützen 7 mit dem einen Magneten 15 aufweisenden Zapfen 1 1 einsteckbar ist. Die Aufnahmen 10 können auch zu einem Langloch zusammengefasst sein; auch können mehr als zwei Aufnahmen 10 in der Kurbel 4 vorliegen. Der Zapfen 11 weist einen Stabmagneten auf mit einer Nord-Süd-Polausrichtung, die koaxial zur Zapfenachse liegt, sodass die Möglichkeit geschaffen ist, zwei Zubehörgruppen zu unterscheiden, beispielsweise für das Beintraining und für das Armtraining, die durch die Ausrichtung des Stabmagneten charakterisiert sind.

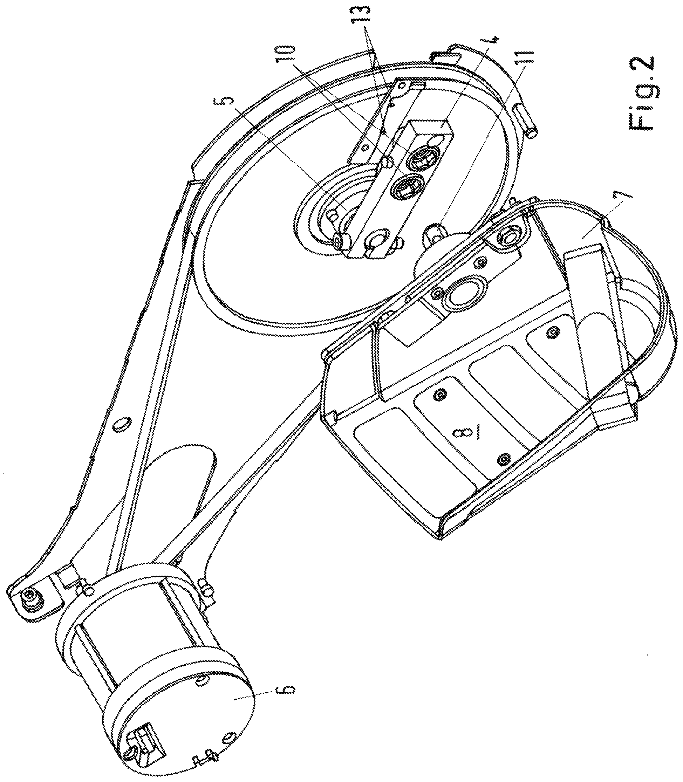

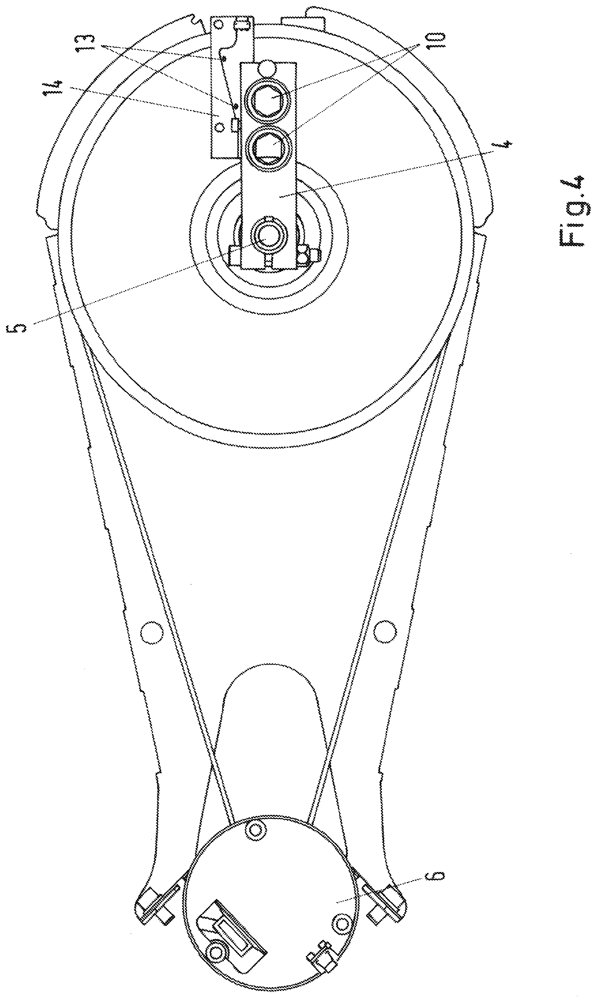

Insbesondere aus den Figuren 2 und 4 ist ersichtlich, dass auf der Platine 14 mehrere Hall-Sensoren 13 angeordnet sind, durch die eine Gerade definiert ist, die nicht durch die Drehachse 5 verläuft, also mit einer radialen Orientierung einen Winkel einschließt, damit die Kurbelstellung relativ zum nutzbaren Sensor immer gleich ist, wenn der Magnet 15 vorbeistreift.

Im Folgenden wird die Nutzung des Trainingsgerät 1 und das dazu erforderliche Verfahren zur Bestimmung der auf einer Extremitätenstütze 7 wirkenden Kraft erläutert. Dazu wird zunächst die Extremitätenstütze 7, also die in der Figur 2 gezeigte Fußschale 8 in einem radialen Abstand 9 von der Drehachse 5 positioniert, indem der Zapfen 11 mit dem Magnet 15 in eine der beiden gezeigten Aufnahmen 10 eingesteckt wird. Durch die Ausrichtung des Stabmagnets, mit dem beispielsweise zur Aufnahme 10 der Kurbel weisenden magnetischen Nordpol ist die Extremitätenstütze 7 als Fußschale 8 identifizierbar zur Unterscheidung beispielsweise von einer Stütze für das Armtraining, bei der magnetische Südpol zu der Aufnahme 10 weist.

Mit den beiden auf der Platine 14 angeordneten Hall-Sensoren 13 kann der radiale Abstand 9 der Fußschale 8 von der Drehachse 5 bestimmt werden, um in Verbindung mit dem an der Drehachse 5 einwirkenden Drehmoment in einer Auswerteeinheit 12 die Kraft zu bestimmen, die gegebenenfalls in einer Anzeigeeinheit 16 als numerischer Wert ausgegeben wird.

### Bezugszeichenliste

1 Trainingsgerät
2 Tragegestell
3 Rolle
4 Kurbel
5 Drehachse
6 Motor
7 Extremitätenstütze
8 Fußschale
9 radialer Abstand
10 Aufnahme
11 Zapfen
12 Auswerteeinheit
13 Hall-Sensor 14 Platine
15 Magnet
16 Anzeigeeinheit

## Patentansprüche

1. Trainingsgerät für das Training mindestens einer Extremität, mit einem Tragegestell (2 ) und mindestens einer Kurbel (4), die an einer dem Tragegestell (2) zugeordneten Drehachse (5) angeordnet ist, und mit mindestens einer Extremitätenstütze (7), die in unterschiedlichen radialen Abständen (9) von der Drehachse (5) an der mindestens eine Kurbel (4) befestigbar ist, wobei ein Mittel zur Erfassung des radialen Abstandes (9) der mindestens eine Extremitätenstütze (7) von der Drehachse (5) vorgesehen ist, wobei das Mittel zur automatisierten Erfassung des radialen Abstandes (9) der Extremitätenstütze (7) von der Drehachse (5) ausgelegt und durch einen Sensor gebildet ist, wobei das Trainingsgerät eine Auswerteeinheit (12) aufweist und **dadurch gekennzeichnet, dass** der von dem Mittel erfasste radiale Abstand (9) als Messwert der Auswerteeinheit (12) zur Berechnung der auf die Extremitätenstütze (7) ausgeübten Kraft zugeführt ist.

2. Trainingsgerät nach Anspruch 1, **dadurch gekennzeichnet, dass** der Sensor, ausgewählt ist aus einer Gruppe, die Hall-Sensoren (13), Ultraschallsensoren, Lasersensoren und photoelektrische Zellen als Teil von Lichtschranken umfasst.

3. Trainingsgerät nach Anspruch 2, mit einem durch den Hall-Sensor (13) gebildeten Sensor, **dadurch gekennzeichnet, dass** auf einer stationär zur Drehachse (5) angeordneten Platine (14) der Hall-Sensor (13) positioniert ist, und dass in der an der Platine (14) vorbeistreichenden Kurbel (4) Aufnahmen (10) und/der ein Langloch ausgebildet sind, in denen die Extremitätenstütze (7) mit einem einen Magneten (15) aufweisenden Zapfen (11) einsteckbar ist.

4. Trainingsgerät nach Anspruch 3, **dadurch gekennzeichnet, dass** der Zapfen (11) einen Stabmagneten aufweist mit einer Nord-Süd-Polausrichtung, die koaxial zur Zapfenachse liegt.

5. Trainingsgerät nach Anspruch 3 oder 4, **dadurch gekennzeichnet, dass** auf der Platine (14) mehrere Hall-Sensoren (13) angeordnet sind.

6. Trainingsgerät nach Anspruch 5, **dadurch gekennzeichnet, dass** die auf der Platine (14) angeordneten Hall-Sensoren (13) auf einer nicht durch die Drehachse (5) gehenden Geraden angeordnet sind.

7. Trainingsgerät nach einem der Ansprüche 1 bis 6, **dadurch gekennzeichnet, dass** bei der Extremitätenstütze (7) ein Zapfen (11) vorhanden ist, der einen Stabmagneten aufweist mit einer Nord-Süd-Polausrichtung, die koaxial zur Zapfenachse liegt.

8. Trainingsgerät nach Anspruch 7, **dadurch gekennzeichnet, dass** die Orientierung der Polausrichtung des Stabmagneten zur Erkennung der Zugehörigkeit zu einer Zubehörgruppe nutzbar ist.

9. Verfahren zur Bestimmung der auf eine Extremitätenstütze (7) eines Trainingsgerätes (1) wirkenden Kraft, umfassend die Schritte der Positionierung der in unterschiedlichen radialen Abständen (9) von der Drehachse (5) der zugeordneten Kurbel (4) befestigbaren Extremitätenstütze (7) an einer Kurbel (4) in einem radialen Abstand (9) von deren Drehachse (5), Erfassung des radialen Abstandes (9) mittels mindestens einem Sensor und Auswertung des durch den Sensor erfassten Messwertes in Verbindung mit einem an der Drehachse (5) einwirkenden Drehmoment in einer Auswerteeinheit (12).

## Claims

1. A training device for training at least one limb, with a support frame (2) and at least one crank (4) arranged on a rotational axis (5) associated with the support frame (2), and with at least one limb support (7) which can be fastened to the at least one crank (4) at different radial distances (9) from the axis of rotation (5), wherein a means for detecting the radial distance (9) of the at least one limb support (7) from the axis of rotation (5) is provided, wherein the means for automatically detecting the radial distance (9) of the limb support (7) from the axis of rotation (5) and is formed by a sensor, wherein the training device has an evaluation unit (12), **characterized in that** the radial distance (9) detected by the means is fed as a measured value to the evaluation unit (12) for calculating the force exerted on the limb support (7).

2. The training device according to claim 1, **characterized in that** the sensor is selected from a group comprising Hall sensors (13), ultrasonic sensors, laser sensors, and photoelectric cells as part of light barriers.

3. The training device according to claim 2, with a sensor formed by the Hall sensor (13), **characterized in that** the Hall sensor (13) is positioned on a circuit board (14) arranged stationary relative to the axis of rotation (5), and **in that** receptacles (10) are formed in the crank (4) passing the circuit board (14) and/or a slot are formed in the crank (4) passing past the circuit board (14) on the crank (4), into which the end support (7) with a pin (11) having a magnet (15) can be inserted.

4. The training device according to claim 3, **characterized in that** the pin (11) has a bar magnet with a north-south pole orientation that is coaxial with the pin axis.

5. The training device according to claim 3 or 4, **characterized in that** several Hall sensors (13) are arranged on the circuit board (14).

6. The training device according to claim 5, **characterized in that** the Hall sensors (13) arranged on the circuit board (14) are arranged on a straight line that does not pass through the axis of rotation (5).

7. The training device according to one of claims 1 to 6, **characterized in that** the limb support (7) has a pin (11) which has a bar magnet with a north-south pole orientation which is coaxial with the pin axis.

8. The training device according to claim 7, **characterized in that** the orientation of the pole alignment of the bar magnet can be used to identify the accessory group to which it belongs.

9. A method for determining the force acting on a limb support (7) of a training device (1), comprising the steps of positioning the limb support (7), which can be fixed at different radial distances (9) from the axis of rotation (5) of the associated crank (4), on a crank (4) at a radial distance (9) from its axis of rotation (5), detecting the radial distance (9) by means of at least one sensor, and evaluating the measured value detected by the sensor in conjunction with a torque acting on the axis of rotation (5) in an evaluation unit (12).

## Revendications

1. Appareil d'entraînement pour l'entraînement au moins d'un membre, avec un châssis porteur (2) et au moins une manivelle (4) qui est agencée au niveau d'un axe de rotation (5) associé au châssis porteur (2), et avec au moins un support de membre (7) qui peut être fixé dans différentes distances radiales (9) par rapport à l'axe de rotation (5) à la au moins une manivelle (4), dans lequel un moyen de détection de la distance radiale (9) de l'au moins un support de membre (7) par rapport à l'axe de rotation (5) est prévu, dans lequel le moyen de détection automatisé de la distance radiale (9) du support de membre (7) par rapport à l'axe de rotation (5) est conçu et est formé par un capteur, dans lequel
l'appareil d'entraînement présente une unité d'évaluation (12) et **caractérisé en ce que** la distance radiale (9) détectée par le moyen est fournie comme valeur de mesure à l'unité d'évaluation (12) pour calculer la force exercée sur le support de membre (7).

2. Appareil d'entraînement selon la revendication 1, **caractérisé en ce que** le capteur est sélectionné parmi un groupe qui comprend des capteurs à effets Hall (13), des capteurs à ultrasons, des capteurs laser et des cellules photoélectriques comme partie de barrières lumineuses.

3. Appareil d'entraînement selon la revendication 2, avec un capteur formé par le capteur à effet Hall (13), **caractérisé en ce que** le capteur à effet Hall (13) est positionné sur une platine (14) agencée de manière stationnaire par rapport à l'axe de rotation (5), et **en ce que** des logements (10) et/ou un trou oblong sont formés dans la manivelle (4) passant devant la platine (14), dans lesquels le support de membre (7) peut être enfiché avec un tenon (11) présentant un aimant (15).

4. Appareil d'entraînement selon la revendication 3, **caractérisé en ce que** le tenon (11) présente un aimant en barre avec un alignement polaire nord-sud qui est situé coaxialement par rapport à l'axe de tenon.

5. Appareil d'entraînement selon la revendication 3 ou 4, **caractérisé en ce que** plusieurs capteurs à effet Hall (13) sont agencés sur la platine (14).

6. Appareil d'entraînement selon la revendication 5, **caractérisé en ce que** les capteurs à effet Hall (13) agencés sur la platine (14) sont agencés sur une droite ne passant pas par l'axe de rotation (5).

7. Appareil d'entraînement selon l'une quelconque des revendications 1 à 6, **caractérisé en ce qu'**un tenon (11) est présent près du support de membre (7), tenon qui présente un aimant en barre avec un alignement polaire nord-sud qui est situé coaxialement par rapport à l'axe de tenon.

8. Appareil d'entraînement selon la revendication 7, **caractérisé en ce que** l'orientation de l'alignement polaire de l'aimant en barre peut être utilisée pour détecter l'appartenance à un groupe d'accessoires.

9. Procédé de détermination de la force agissant sur un support de membre (7) d'un appareil d'entraînement (1) comprenant les étapes de positionnement du support de membre (7) pouvant être fixé dans différentes distances (9) radiales par rapport à l'axe de rotation (5) de la manivelle (4) associée au niveau d'une manivelle (4) dans une distance (9) radiale par rapport à son axe de rotation (5), de détection de la distance radiale (9) au moyen d'au moins un capteur et d'évaluation de la valeur de mesure détectée par le capteur en liaison avec un couple agissant au niveau de l'axe de rotation (5) dans une unité d'évaluation (12).
